# EUROPÄISCHE PATENTSCHRIFT

(11) **EP 2 606 185 B1**
(45) Veröffentlichungstag und Bekanntmachung des Hinweises auf die Patenterteilung: **23.10.2019**
(21) Anmeldenummer: 11746531.0
(22) Anmeldetag: 18.08.2011
(51) Int. Cl.: E01D 22/00, E04C 5/12, E04G 23/02

(54) **VORRICHTUNG ZUR KRAFTEINLEITUNG IN ZUGGLIEDER AUS FASERVERSTÄRKTEN KUNSTSTOFF-FLACHBANDLAMELLEN**
DEVICE FOR INTRODUCING A FORCE INTO TENSION MEMBERS MADE OF FIBER-REINFORCED PLASTIC FLAT STRIP LAMELLA
DISPOSITIF D'INTRODUCTION DE FORCE DANS DES ÉLÉMENTS DE TRACTION CONSTITUÉS DE LAMELLES PLATES EN MATIÈRE PLASTIQUE RENFORCÉE PAR DES FIBRES

(30) Priorität: 18.08.2010 EP 10173179
(43) Veröffentlichungstag der Anmeldung: 26.06.2013
(73) Patentinhaber: Sika Technology AG, 6340 Baar (CH)
(72) Erfinder: BERSET, Thierry, CH-8400 Winterthur (CH); BÄNZIGER, Heinz, CH-8427 Freienstein (CH); HORISBERGER, Patrik, CH-8405 Winterthur (CH)
(74) Vertreter: Sika Patent Attorneys
(86) Internationale Anmeldenummer: PCT/EP2011/064225
(87) Internationale Veröffentlichungsnummer: WO 2012/022783

(56) Entgegenhaltungen:
- EP-A1- 0 949 389
- WO-A1-2004/003316
- AT-B- 412 564
- DE-A1- 10 060 459
- US-A- 5 713 169
- "Technik Tabelle - Kunststoff", , Retrieved from the Internet: URL:http://www.hug-technik.com/inhalt/ta/k unststoff.html [retrieved on 2015-11-30]

## Beschreibung

### Technisches Gebiet

Die Erfindung betrifft eine Vorrichtung zur Krafteinleitung in Zugglieder aus faserverstärkten Kunststoff-Flachbandlamellen nach dem Oberbegriff des ersten Anspruchs. Weiterhin betrifft die Erfindung ein Verfahren zur Krafteinleitung in derartige Zugglieder, die Verwendung einer entsprechenden Vorrichtung, Zugglieder, welche eine oder mehrere erfindungsgemässe Vorrichtungen aufweisen, sowie ein Verfahren zur Verstärkung von Tragwerken unter Einsatz der erfindungsgemässen Vorrichtung.

### Stand der Technik

Die Verstärkung von Tragwerken, beispielsweise bei der Sanierung bestehender Bauwerke, durch Anbringen von Zuggliedern aus faserverstärkten Kunststoff-Flachbandlamellen, welche unter Spannung an das Tragwerk geklebt werden, ist bekannt und weist vielerlei Vorteile gegenüber der Verstärkung von Tragwerken mittels Stahlkonstruktionen auf. Da die Krafteinleitung in die Zugglieder hauptsächlich über deren Endverankerung an den Zugseiten des Tragwerks erfolgt, wird ihr besondere Bedeutung zugemessen.

Für die Endverankerung, jedoch auch für die Vorspannung, von Zuggliedern aus faserverstärkten Kunststoff-Flachbandlamellen, sind unterschiedliche Systeme bekannt, welche den besonderen Anforderungen im Umgang mit faserverstärkten Kunststoff-Flachbandlamellen Rechnung tragen.

Beispielsweise beschreibt WO 2005/061813 A1 Verankerungen für Zugglieder bestehend aus zwei Keilen und einem Ankerkörper, welcher im Wesentlichen eine Hülse für die Keile darstellt, wobei zwischen Keilen und Zugglied und/oder zwischen Keilen und Hülse eine zweite, wiederum keilförmige Schicht angeordnet ist. Diese zweite keilförmige Schicht besteht aus einem Material mit einem niedrigeren Elastizitätsmodul als jenes der ersten Keile und Hülsenmaterial und ist in der Vorrichtung so angeordnet, dass die grösste Dicke dieser Schicht im lastnahen Bereich vorgesehen ist. Durch diese Anordnung soll eine gleichmässige Verteilung des Anpressdrucks und der Schubspannung zwischen Keilen und Zugglied erreicht werden. Die Krafteinleitung in das Zugglied erfolgt im beschriebenen System über die Hülse, d.h. über die Abstützung der Hülse auf das zu verstärkende Tragwerk.

Der Nachteil der in WO 2005/061813 A1 beschriebenen Vorrichtungen ist einerseits, dass Keile unterschiedlicher Formen und Materialien eingesetzt werden, wodurch sowohl die Herstellung der Vorrichtung als auch ihre korrekte Anordnung an einem Zugglied mit einem höheren Aufwand verbunden sind.

Andererseits liegt ein weiterer Nachteil der beschriebenen Vorrichtung darin, dass die Krafteinleitung in das Zugglied über die Hülse erfolgt. Dadurch ist die Ausgestaltung der Vorrichtung grundsätzlich dahingehend begrenzt, dass die Keile eine Querschnittsreduktion in Zugrichtung des Zugglieds aufweisen müssen, da sie sonst bei Belastung aus der Hülse treten können.

Weiterhin beschreibt WO 2004/003316 A1 eine Vorrichtung zur Krafteinleitung in Zugglieder, bestehend im Wesentlichen aus zwei Keilen, welche um das Zugglied angeordnet und in eine Hülse getrieben werden. Das Zugglied ist dabei an seinen Enden mit Mitteln zur Haftvermittlung versehen. Die Keile bestehen aus hochfestem Material.

Bekanntermassen erfordert die Verankerung von Zuggliedern aus faserverstärkten Kunststoff-Flachbandlamellen über Keilverankerungen eine möglichst gleichmässige Spannungsverteilung in der Grenzfläche der Keile und des Zugglieds sowohl in Längs- als auch in Querrichtung.

Durch die Verwendung von hochfesten Materialien für die Keile, wie sie in WO 2004/003316 A1 beschrieben sind, erfolgt diese Spannungsverteilung ungenügend, wodurch die Effizienz der Krafteinleitung in das Zugglied begrenzt ist. Eine ausgeglichene Spannungsverteilung kann bei einer derartigen Ausführungsform nur mit einem sehr grossen Aufwand und hoher Präzision für die Formgebung der Keile und deren Anordnung in der Hülse erzielt werden. AT 412564B, US5713169A und EP0949389A1 zeigen weitere Vorrichtungen zur Krafteinleitung in Zugglieder gemäß dem Stand der Technik.

### Darstellung der Erfindung

Die Aufgabe der vorliegenden Erfindung ist es daher, eine Vorrichtung zur Krafteinleitung in Zugglieder aus faserverstärkten Kunststoff-Flachbandlamellen bereitzustellen, welche die Nachteile des Standes der Technik überwindet und sich insbesondere durch eine einfache Herstellung und Anordnung am Zugglied auszeichnet und einen gleichmässigen Klemmdruck auf das Zugglied erzeugt.

Erfindungsgemäss wird diese Aufgabe durch eine Vorrichtung nach Anspruch 1 gelöst.

Kern der Erfindung ist demnach eine Vorrichtung gemäß Anspruch 1 zur Krafteinleitung in Zugglieder aus faserverstärkten Kunststoff-Flachbandlamellen umfassend mindestens ein Klemmelement, welches am Zugglied angeordnet ist und mindestens eine Kontaktfläche mit dem Zugglied aufweist, sowie mindestens eine starre Hülse, welche um das Klemmelement und das Zugglied herum angeordnet ist und dadurch über das Klemmelement einen Klemmdruck auf das Zugglied ausübt, wobei das Klemmelement aus Kunststoff besteht, welcher einen Elastizitätsmodul im Bereich von 1000 bis 5000 MPa, eine Biegezugfestigkeit von ≥ 25 MPa und eine Druckfestigkeit von ≥ 25 MPa aufweist, und dass die Gesamtheit der Klemmelemente eine zylindrische Außenform aufweist, oder dass die Gesamtheit der Klemmelemente eine keilförmige oder konische Struktur aufweist, wobei die Querschnittsreduktion gegen die Zugrichtung des Zugglieds verläuft, und wobei die Hülse eine zur Aufnahme der Klemmelemente und zur Ausübung des Klemmdrucks geeignete innere Form aufweist.

Überraschenderweise wurde gefunden, dass der Einsatz von Klemmelementen aus Kunststoff mit den beschriebenen Eigenschaften einen gleichmässigen Klemmdruck bzw. Querdruck in der Grenzfläche zwischen Zugglied und Klemmelement erzeugen, was eine sehr effiziente und gleichmässige Krafteinleitung in Zugglieder ermöglicht.

Weiterhin weist die erfindungsgemässe Vorrichtung den Vorteil auf, dass sie sehr einfach herzustellen und anzuwenden ist.

Ein weiterer Vorteil der erfindungsgemässen Vorrichtung geht insbesondere aus einer bevorzugten Ausführungsform hervor, gemäss welcher die Krafteinleitung in das Zugglied über das Klemmelement bzw. die Klemmelemente erfolgt. Gemäss dieser Ausführungsform ist es möglich, die erfindungsgemässe Vorrichtung an bereits vollständig gespannten Zuggliedern anzubringen.

Bei der bevorzugten Verwendung der erfindungsgemässen Vorrichtung mit entsprechenden Zuggliedern aus kohlefaserverstärkten Flachbandlamellen zur Tragwerksverstärkung, gewährleistet der für die Klemmelemente verwendete Kunststoff zusätzlich die galvanische Trennung zwischen der elektrisch leitfähigen Lamelle und der typischerweise aus Stahl bestehenden Verankerung im Bauwerk. Ohne galvanische Trennung besteht die Gefahr, dass das Zugglied über die Verankerungen mit der inneren Stahlbewehrung des zu verstärkenden Stahlbetonbauteils elektrisch verbunden wird und mit diesem ein galvanisches Makroelement bildet. Dies kann zu einer sehr rasch fortschreitenden Korrosion der Verankerungen oder der inneren Stahlbewehrung des Stahlbetonbauteils führen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
- Figur 1: schematisch eine erfindungsgemässe Vorrichtung mit Zugglied;
- Figur 2: schematisch eine erfindungsgemässe Vorrichtung mit Zugglied;
- Figur 3: schematisch einen Querschnitt durch eine erfindungsgemässe Vorrichtung mit Zugglied;
- Figur 4: schematisch einen Querschnitt durch eine erfindungsgemässe Vorrichtung mit Zugglied;
- Figur 5: schematisch einen Querschnitt durch eine erfindungsgemässe Vorrichtung mit Zugglied;
- Figur 6: schematisch einen Längsschnitt durch eine erfindungsgemässe Vorrichtung mit Zugglied;
- Figur 7: schematisch einen Ausschnitt des Aufbaus einer erfindungsgemässen Vorrichtung mit Reibungselement und Zugglied;
- Figur 8: schematisch einen Längsschnitt durch eine erfindungsgemässe Vorrichtung mit Schlitzplatte und Zugglied; Figur 9c schematisch einen Längsschnitt durch eine erfindungsgemässe Vorrichtung mit Reibungselement und Zugglied;
- Figuren 9a, 9b und 9d: schematisch einen Längsschnitt durch eine beispielhafte Vorrichtung mit Reibungselement und Zugglied;
- Figuren 10a bis 10e: schematisch die Schritte eines Verfahrens zur Krafteinleitung in Zugglieder aus faserverstärkten Kunststoff-Flachbandlamellen im Längsschnitt;
- Figuren 11a bis 11c: schematisch die Schritte eines Verfahrens zum Verbinden von zwei Zuggliedern mittels erfindungsgemässer Vorrichtung;
- Figuren 12a und 12b: schematisch eine Verankerung eines Zugglieds mit erfindungsgemässer Vorrichtung zur Krafteinleitung an einem zu verstärkenden Tragwerk im Längsschnitt und in der Aufsicht;
- Figuren 13a und 13b: schematisch ein Zugelement für ein Zugglied mit erfindungsgemässer Vorrichtung zur Krafteinleitung an einem zu verstärkenden Tragwerk im Längsschnitt und in der Aufsicht.

In den Figuren sind nur die für das unmittelbare Verständnis der Erfindung wesentlichen Elemente gezeigt.

### Wege zur Ausführung der Erfindung

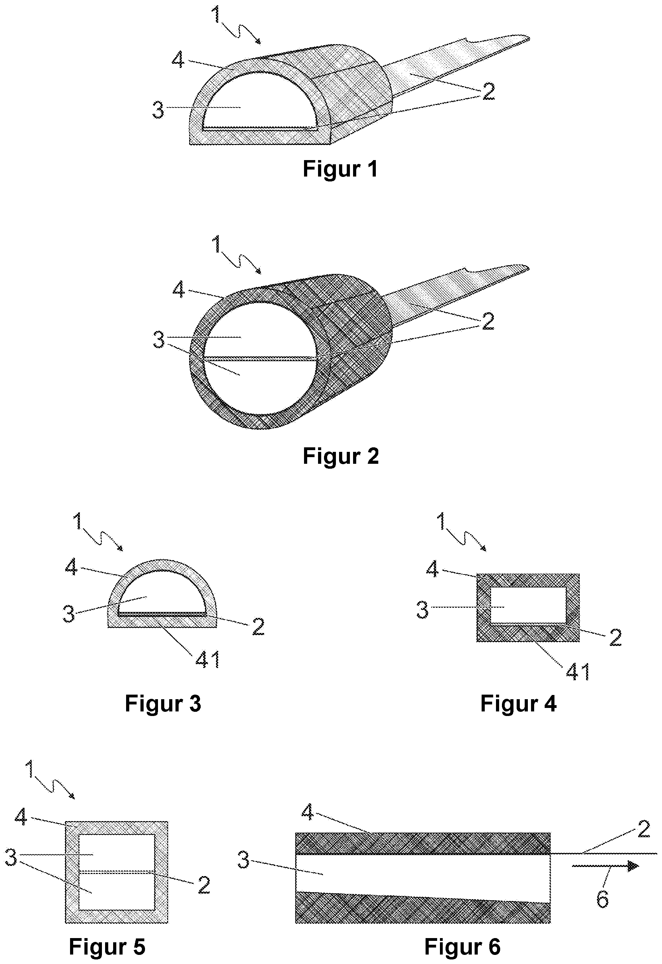

Figur 1 zeigt eine Vorrichtung 1 zur Krafteinleitung in Zugglieder 2 aus faserverstärkten Kunststoff-Flachbandlamellen umfassend ein Klemmelement 3, welches am Zugglied angeordnet ist und eine Kontaktfläche mit dem Zugglied aufweist, sowie mindestens eine starre Hülse 4, welche um das Klemmelement und das Zugglied herum angeordnet ist und dadurch über das Klemmelement einen Klemmdruck auf das Zugglied ausübt.

Erfindungsgemäss besteht das Klemmelement aus Kunststoff, welcher einen Elastizitätsmodul im Bereich von 1000 bis 5000 MPa, eine Biegezugfestigkeit von ≥ 25 MPa, insbesondere von 50 bis 150 MPa, und eine Druckfestigkeit von ≥ 25 MPa aufweist.

Die angegebenen Werte beziehen sich auf Messungen entsprechend den Normen ISO 604 für den Elastizitätsmodul sowie ISO 178 für die Biegezugfestigkeit und die Druckfestigkeit.

Als Kunststoff für das Klemmelement kann grundsätzlich jeder beliebige Kunststoff mit den entsprechenden physikalischen Eigenschaften eingesetzt werden, wobei dieser gefüllt oder ungefüllt oder gegebenenfalls faserverstärkt sein kann. Als gefüllter Kunststoff kann beispielsweise auch ein elastifizierter Mörtel eingesetzt werden.

Insbesondere besteht das Klemmelement aus einem Kunststoff umfassend mindestens ein Polyurethanpolymer. Der Kunststoff ist vorzugsweise ungefüllt.

Die Vorteile des bevorzugt eingesetzten Kunststoffs sind die im Verhältnis zum E-Modul hohen Biegezug- und Druckfestigkeiten, die sehr gute Formbeständigkeit, die sehr hohe Quellbeständigkeit sowie die dichte, gleitfähige Oberfläche. Die geringe Gleitreibung ermöglicht den Aufbau grosser Klemmkräfte bei verhältnismässig geringer Verpresskraft.

Das im Vergleich zum Zugglied und zur Hülse weiche Klemmelement erzeugt einen gleichmässigen Klemmdruck auf das Zugglied, was eine sehr effiziente und gleichmässige Krafteinleitung in das Zugglied ermöglicht. Insbesondere bei Zuggliedern aus unidirektional faserverstärkten Kunststoff-Flachbandlamellen ist dies ein besonderer Vorteil, da unterschiedliche Spannungen zwischen den Fasern nur beschränkt ausgeglichen werden können.

Ein geeigneter Kunststoff zur Herstellung der Klemmelemente ist unter dem Handelsnamen SikaBlock®, beispielsweise SikaBlock® M940, kommerziell erhältlich von Sika Deutschland AG.

Das Klemmelement kann grundsätzlich jede beliebige Form aufweisen, sofern diese dazu geeignet ist das Zugglied zwischen Klemmelement und Hülse bzw. zwischen mehreren Klemmelementen einzuklemmen.

Insbesondere weist die erfindungsgemässe Vorrichtung ein oder zwei Klemmelemente auf, welche um das Zugglied angeordnet sind und jeweils mindestens eine Kontaktfläche mit dem Zugglied aufweisen.

Bei der bevorzugten Ausführungsform der Erfindung mit zwei Klemmelementen, sind diese vorzugsweise jeweils als eine Hälfte eines in Längsrichtung halbierten Zylinders ausgebildet. Die ebene Fläche, entlang welcher der Zylinder halbiert wurde, stellt in diesem Fall die Kontaktfläche des Klemmelements mit dem Zugglied dar. Weiterhin kann die Gesamtheit der Klemmelemente, d.h. alle Klemmelemente einer Vorrichtung mit sich berührenden Kontaktflächen, eine konische oder keilförmige Struktur aufweisen.

Figur 2 zeigt eine bevorzugte Ausführungsform der Vorrichtung 1 zur Krafteinleitung in Zugglieder 2 aus faserverstärkten Kunststoff-Flachbandlamellen umfassend zwei Klemmelemente 3, welche um das Zugglied angeordnet sind und jeweils mindestens eine Kontaktfläche mit dem Zugglied aufweisen, sowie mindestens eine starre Hülse 4, welche um die Klemmelemente herum angeordnet ist und dadurch über die Klemmelemente einen Klemmdruck auf das Zugglied ausübt.

Die starre Hülse der erfindungsgemässen Vorrichtung ist um das Klemmelement bzw. die Klemmelemente und das Zugglied herum angeordnet und übt dadurch über das Klemmelement bzw. die Klemmelemente einen Klemmdruck auf das Zugglied aus.

Die Hülse besteht insbesondere aus einem Kunststoff, aus Metall, aus einer Metalllegierung oder aus einem anderen hochfesten Material. Bevorzugt besteht die Hülse aus faserverstärktem Kunststoff oder Stahl, meist bevorzugt aus kohlefaserverstärktem Kunststoff auf Epoxidharzbasis.

Grundsätzlich kann die Hülse beliebig ausgebildet sein, sofern sie zur Aufnahme des oder der Klemmelemente mit Zugglied und gegebenenfalls Reibungselement und zur Ausübung eines ausreichenden Klemmdrucks auf das Zugglied geeignet ist. Demnach muss die Hülse nicht rohrförmig ausgestaltet sein, sondern kann eine zur Aufnahme der Klemmelemente geeignete Bohrung oder Aussparung in einem beliebigförmigen Gegenstand sein.

Beispielsweise zeigt Figur 3 einen Querschnitt durch eine erfindungsgemässe Vorrichtung 1 bestehend aus einem Zugglied 2, einem Klemmelement 3 und einer Hülse 4, wobei die Hülse die Form eines in Längsrichtung halbierten Rohrs mit einer ebenen Auflage 41 als Gegenstück zum Klemmelement aufweist.

Figur 4 zeigt einen Querschnitt durch eine erfindungsgemässe Vorrichtung 1, wobei die Hülse 4 eine rechteckige Form mit einer ebenen Auflage 41 als Gegenstück zum Klemmelement aufweist. Bei dieser Ausführungsform weist das Klemmelement 3 die Form eines Quaders oder eines stupfen Keils auf.

Figur 5 zeigt einen Querschnitt durch eine erfindungsgemässe Vorrichtung 1 mit einer Hülse 4, welche eine rechteckige Form aufweist, wobei diese Ausführungsform zwei Klemmelemente 3 aufweist, welche um das Zugglied 2 angeordnet sind. Analog zu Figur 4 weisen die Klemmelemente 3 die Form von Quadern stumpfen Keilen auf.

Figur 6 zeigt einen Längsschnitt durch eine erfindungsgemässe Vorrichtung bestehend aus einem Zugglied 2, einem Klemmelement 3 und einer Hülse 4, wobei das Klemmelement eine Querschnittsreduktion gegen die Zugrichtung 6 des Zugglieds 2 aufweist. Die Hülse 4 weist entsprechend eine zur Aufnahme der Klemmelemente und zur Ausübung eines Klemmdrucks geeignete innere Form auf.

Bevorzugt handelt es sich bei der starren Hülse um eine rohrförmige Hülse mit einem runden Querschnitt, wobei die innere Form der Hülse stets eine zur Aufnahme der Klemmelemente mit Zugglied und gegebenenfalls Reibungselement geeignete Form sein muss, welche zur Ausübung eines ausreichenden Klemmdrucks auf das Zugglied geeignet ist.

Bei Verwendung zweier Klemmelemente in Form von stumpfen Keilen wird eine Hülse mit einem recheckigen Querschnitt eingesetzt, wobei auch hierbei die innere Form der Hülse stets eine zur Aufnahme der Klemmelemente mit Zugglied und gegebenenfalls Reibungselement geeignete Form aufweisen muss. Die Hülse kann dabei aus ausreichend steifen Platten hergestellt werden.

Um einen optimalen Klemmdruck auf das Zugglied auszuüben, weist die Hülse typischerweise eine innere Form auf, welche einen gegenüber der Aussenform der Klemmelemente mit Zugglied und gegebenenfalls Reibungselement reduzierten Querschnitt aufweist.

Der Unterschied des Durchmessers der Gesamtheit der Klemmelemente mit Zugglied und gegebenenfalls Reibungselement zum inneren Durchmesser der Hülse beträgt insbesondere 2 bis 10 %, bevorzugt etwa 5 %.

Bei der Bereitstellung erfindungsgemässer Vorrichtungen wird die starre Hülse auf das Klemmelement, welches gegebenenfalls mit Reibungselement versehen ist und am Zugglied angeordnet ist, aufgeschoben, bzw. das Klemmelement wird in die Hülse eingetrieben, wodurch sich der notwendige Klemmdruck auf das Zugglied aufbaut.

Das Zugglied besteht aus einer faserverstärkten Kunststoff-Flachbandlamelle, wie sie dem Fachmann für unterschiedliche Anwendungen bekannt ist. Insbesondere handelt es sich um unidirektional faserverstärkte Kunststoff-Flachbandlamellen. Die Faserverstärkung erfolgt üblicherweise durch Kohlefasern. Als Kunststoffmatrix dient insbesondere eine Epoxidharzmatrix.

Geeignete faserverstärkte Kunststoff-Flachbandlamellen sind beispielsweise unter dem Handelsnamen Sika® CarboDur® kommerziell erhältlich sind von Sika Schweiz AG.

In einer bevorzugten Ausführungsform umfasst die erfindungsgemässe Vorrichtung im Bereich der Kontaktflächen zwischen Klemmelement und Zugglied zusätzlich ein Reibungselement. Das Reibungselement hat die Funktion, die Reibung zwischen Klemmelement und Zugglied zu erhöhen und somit das Herausschlüpfen des Zugglieds aus der Vorrichtung auch bei besonders hohen Zugkräften zu verhindern.

Insbesondere ist das Reibungselement ausgewählt aus
- einer Beschichtung des Zugglieds mit Hartkörnern;
- einer Beschichtung der Klemmelemente mit Hartkörnern; und
- einem mit Hartkörnern besetzten Gewebe, insbesondere ein Netz oder ein Gitter.

Bei den Hartkörnern handelt es sich insbesondere um scharfkantige Körner, welche typischerweise aus einem Material bestehen, welches eine Mohssche Härte im Bereich von ≥ 5, insbesondere von ≥ 7, bevorzugt von ≥ 9, aufweist. Beispielsweise handelt es sich bei den Hartkörnern um solche aus Korund oder Siliciumcarbid.

Die Korngrösse der Hartkörner beträgt typischerweise 0.05 bis 1.0 mm, insbesondere 0.2 bis 0.5 mm.

Meist bevorzugt besteht das Reibungselement aus einer Beschichtung des Klemmelements im Bereich seiner Kontaktfläche mit dem Zugglied, mit Hartkörnern.

Handelt es sich bei der Vorrichtung um eine Ausführungsform mit mehr als einem Klemmelement, umfasst diese insbesondere im Bereich der Kontaktflächen zwischen allen Klemmelementen und Zugglied zusätzlich je ein Reibungselement.

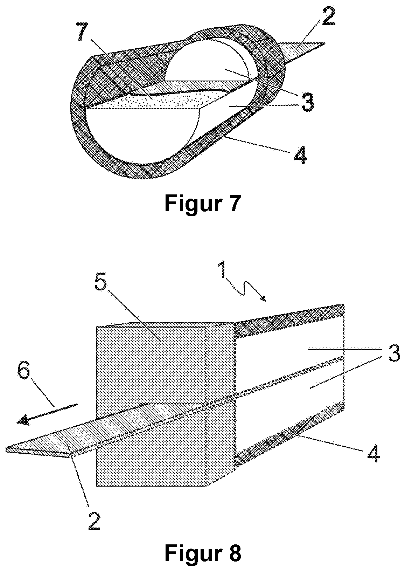

Figur 7 zeigt einen schematischen Schichtaufbau einer Vorrichtung, wie sie bereits in Figur 2 beschrieben worden ist, wobei die Klemmelemente 3 in dieser Ausführungsform ein Reibungselement 7 in Form einer Beschichtung der Klemmelemente mit Hartkörnern aufweisen.

Die Krafteinleitung in das Zugglied erfolgt in einer bevorzugten Ausführungsform über das Klemmelement bzw. die Klemmelemente der Vorrichtung und nicht über die starre Hülse.

Wie in Figur 8 dargestellt erfolgt die Krafteinleitung typischerweise dadurch, dass, in Zugrichtung 6 des Zugglieds 2 betrachtet, vor die erfindungsgemässe Vorrichtung 1 eine Schlitzplatte 5 angeordnet ist, auf welcher sich das Klemmelement bzw. die Klemmelemente 3 abstützen. Die Schlitzplatte weist dabei einen Schlitz auf, durch welchen das Zugglied hindurchgeführt werden kann. Gleichzeitig stützt die Schlitzplatte die Klemmelemente 3 auf einer möglichst grossen Fläche ab.

Da sich, wie in Figur 8 zu erkennen ist, auch die Hülse 4 zumindest teilweise auf der Schlitzplatte 5 abstützt, ist dem Fachmann selbstverständlich klar, dass auch über die Hülse eine gewisse Kraftübertragung auf das Zugglied stattfindet, jedoch erfolgt die Krafteinleitung hauptsächlich über die Klemmelemente 3.

Typischerweise besteht die Schlitzplatte aus Metall oder aus einer Metalllegierung. Weiterhin muss die Schlitzplatte nicht einteilig ausgebildet sein, sondern kann aus mehreren Teilen bestehen. Eine mehrteilige Schlitzplatte eignet sich beispielsweise dann, wenn sie an einem bereits einsatzbereiten Zugglied, welches bereits mit erfindungsgemässen Vorrichtungen zur Krafteinleitung versehen ist, angebracht werden soll.

Die Krafteinleitung in das Zugglied über das Klemmelement bzw. die Klemmelemente der erfindungsgemässen Vorrichtung ist besonders vorteilhaft. Bei dieser Ausführungsform sind die Klemmelemente zwischen Hülse, Zugglied und Abstützung eingeschlossen und weisen bei grossen Belastungen eine, durch die physikalischen Eigenschaften des Kunststoffs, aus welchem die Klemmelemente gefertigt sind, bedingte, volumenkonstante elastische und viskoplastische Verformung auf, welche zum Ausgleich von Spannungen zwischen Klemmelement und Zugglied führt. Diese Eigenschaft verbessert die Klemmwirkung der Klemmelemente und somit die Effizienz der Krafteinleitung deutlich.

In einer meist bevorzugten Ausführungsform umfasst die erfindungsgemässe Vorrichtung, wie sie vorhergehend beschreiben worden ist, zwei Klemmelemente, welche um das Zugglied angeordnet sind und je eine Kontaktfläche mit dem Zugglied aufweisen, wobei die Kontaktflächen insbesondere mit je einem Reibungselement versehen sind, sowie eine starre Hülse aus kohlefaserverstärktem Kunststoff, welche um die beiden Klemmelemente herum angeordnet ist und dadurch über die Klemmelemente einen Klemmdruck auf das Zugglied ausübt.

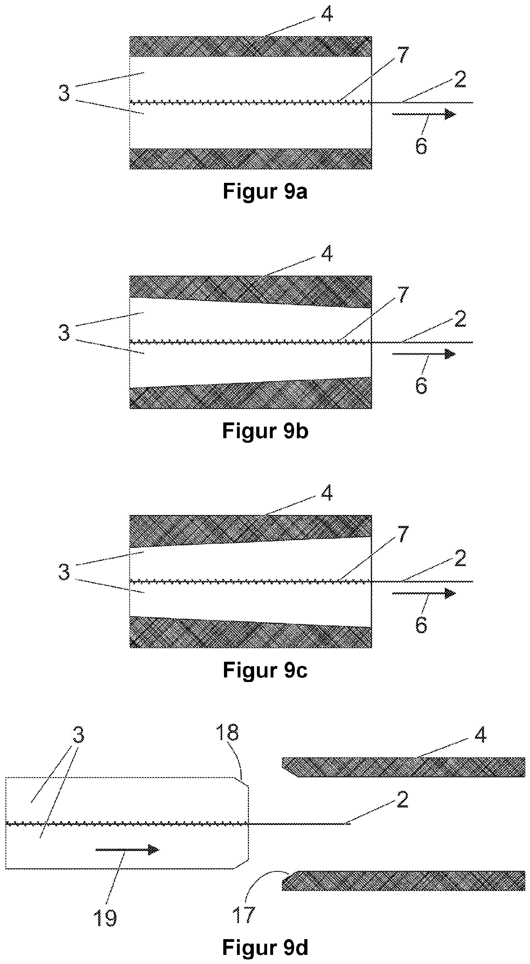

Bezüglich des Aufbaus der Vorrichtung lassen sich drei Ausführungsformen unterscheiden. In den Figuren 9a und 9b sind diese anhand einer beispielhaften Vorrichtung mit zwei Klemmelementen dargestellt. In analoger Weise sind diese Ausführungsformen auch bei Vorrichtungen mit einem oder mehr als zwei Klemmelementen bevorzugt.

In der ersten dieser beispielhaften Ausführungsformen, welche in Figur 9a gezeigt ist, weist die Gesamtheit der Klemmelemente 3, welche mit Reibungselementen 7 abgebildet sind, eine zylindrische Aussenform auf. Weiterhin weist die Hülse 4 eine ebenfalls zylindrische innere Form auf.

Figur 9b zeigt die zweite dieser beispielhaften bevorzugten Ausführungsformen, bei welcher die Gesamtheit der Klemmelemente 3 eine konische Struktur aufweist, wobei die Querschnittsreduktion in Zugrichtung 6 des Zugglieds 2 verläuft. Die Hülse 4 weist eine zur Aufnahme der Klemmelemente und zur Ausübung eines Klemmdrucks geeignete innere Form auf, d.h., dass sie in diesem Fall eine ebenfalls konische Aussparung aufweist.

Figur 9c zeigt die Ausführungsform gemäß der Erfindung, bei welcher die Gesamtheit der Klemmelemente 3 eine konische Struktur aufweist, wobei die Querschnittsreduktion gegen die Zugrichtung 6 des Zugglieds 2 verläuft. Die Hülse 4 weist eine zur Aufnahme der Klemmelemente und zur Ausübung eines Klemmdrucks geeignete innere Form auf, also ebenfalls eine konische Aussparung.

Bei allen drei in den Figuren 9a, 9b und 9c gezeigten Ausführungsformen ist der Durchmesser der Gesamtheit der Klemmelemente 3 typischerweise grösser als der innere Durchmesser der Hülse. Dadurch kann ein optimaler Klemmdruck auf das Zugglied 2 ausgeübt werden.

Die in Figur 9a gezeigte Ausführungsform dass sie sehr einfach herzustellen ist. Insbesondere ist bei dieser Ausführungsform die Herstellung der Hülse besonders einfach, da sie durch Zerlegung beispielsweise eines Rohrs aus geeignetem Material erhältlich ist.

Bei den in den Figuren 9b und 9c gezeigten Ausführungsformen weist die Aussenseite der Gesamtheit der Klemmelemente und die innere Form der Hülse einen Keilanzug im Bereich von 1:4 bis 1:200, insbesondere im Bereich von 1:100, auf.

Die Ausführungsformen mit Keilanzug haben gegenüber den Ausführungsformen ohne Keilanzug den Vorteil, dass das Aufschieben oder Aufziehen der Hülse über die Klemmelemente mit Zugglied und gegebenenfalls Reibungselement, bzw. das Eintrieben dieser in die Hülse erleichtert möglich ist.

Um ein erleichtertes Aufschieben oder Aufziehen der Hülse auf die Klemmelemente zu ermöglichen, kann die Hülse auf jener Seite, von der sie auf die Klemmelemente aufgeschoben oder aufgezogen wird, eine zusätzliche, hierfür geeignete Aussparung an ihrer Innenseite aufweisen. Eine geeignete Aussparung stellt dabei eine sogenannte Fase dar.

Aus dem gleichen Grund kann auch das Klemmelement bzw. die Klemmelemente an jener Seite, von der sie in die Hülse getrieben werden oder von welcher die Hülse über die Klemmelemente geschoben oder gezogen wird, eine derartige Aussparung aufweisen. Insbesondere ist auch diese Aussparung als Fase ausgebildet.

Figur 9d zeigt eine analoge Ausführungsform wie in Figur 9a bevor die Klemmelemente 3 in Eintriebsrichtung 19 in die Hülse 4 getrieben worden sind, wobei die Hülse mit einer Fase 17 versehen ist, die das erleichtere Eintreiben der Klemmelemente ermöglicht. Weiterhin sind zum gleichen Zweck auch die Klemmelemente mit einer Fase 18 versehen.
weist die Gesamtheit der Klemmelemente 3, welche mit Reibungselementen 7 abgebildet sind, eine zylindrische Aussenform auf. Weiterhin weist die Hülse 4 eine ebenfalls zylindrische innere Form auf.

Weiterhin betrifft die vorliegende Erfindung die Verwendung einer Vorrichtung, wie sie vorhergehend beschrieben worden ist, zur Krafteinleitung in Zugglieder aus faserverstärkten Kunststoff-Flachbandlamellen.

Die erfindungsgemässe Vorrichtung kann dabei an jeder beliebigen Stelle der Kunststoff-Flachbandlamelle angebracht sein, je nachdem wo die Krafteinleitung erfolgen soll. Insbesondere bildet die Vorrichtung das Abschlusselement des Zugglieds.

Weiterhin kann die erfindungsgemässe Vorrichtung auch verwendet werden, um mehrere Zugglieder aus Kunststoff-Flachbandlamellen miteinander zu verbinden. Hierzu werden die Zugglieder mindestens über die Gesamtlänge der Vorrichtung überlappend zueinander angeordnet. Danach wird an Stelle der Überlappung eine erfindungsgemässe Vorrichtung angebracht. Insbesondere wird bei einer derartigen Verwendung zwischen die zu verbindenden Zugglieder ein Reibungselement gemäss vorhergehender Beschreibung eingesetzt.

Weiterhin betrifft die vorliegende Erfindung ein Zugglied aus faserverstärkten Kunststoff-Flachbandlamellen, umfassend mindestens eine Vorrichtung, wie sie vorhergehend beschrieben ist.

Insbesondere ist das Zugglied ein solches, welches an mindestens einem Ende, insbesondere an beiden Enden, ein Abschlusselement aufweist, wobei dieses Abschlusselement eine Vorrichtung gemäss vorhergehender Beschreibung ist.

Ebenfalls betrifft die vorliegende Erfindung eine Zuggliederanordnung, bestehend aus zwei oder mehr Zuggliedern, welche mittels erfindungsgemässer Vorrichtung miteinander verbunden sind.

Weiterhin betrifft die vorliegende Erfindung ein Verfahren zur Krafteinleitung in Zugglieder aus faserverstärkten Kunststoff-Flachbandlamellen umfassend die Schritte
i) Anlegen des Zugglieds an mindestens ein Klemmelement aus Kunststoff, wie es vorhergehend beschrieben worden ist, sodass das Klemmelement mindestens eine Kontaktfläche mit dem Zugglied aufweist;
ii) Aufschieben oder Aufziehen einer starren Hülse über das mindestens eine Klemmelement und das Zugglied, sodass ein Klemmdruck auf das Zugglied ausgeübt wird;
iii) Anlegen einer Zugvorrichtung an das am Zugglied angeordnete mindestens eine Klemmelement mit Hülse;
iv) Einleiten der Kraft in das Zugglied durch die Zugvorrichtung, wobei die Krafteinleitung insbesondere über das mindestens eine Klemmelement erfolgt.

Dieses beschriebene Verfahren eignet sich für alle drei in den Figuren 9a, 9b und 9c gezeigten Ausführungsformen gleichermassen.

Ein weiteres Verfahren zur Krafteinleitung in Zugglieder aus faserverstärkten Kunststoff-Flachbandlamellen, welches ebenfalls Gegenstand der vorliegenden Erfindung ist und insbesondere zur Anwendung auf die Vorrichtungen, wie sie in der Figur 9c beschrieben ist, geeignet ist, umfasst die Schritte
i') Bereitstellen eines Zugglieds, welches mit einem Ende an einem Tragwerk verankert ist;
ii') Anlegen einer Zugvorrichtung am nicht verankerten Ende des Zugglieds;
iii') Spannen des Zugglieds durch die Zugvorrichtung;
iv') Anlegen mindestens eines Klemmelements aus Kunststoff, wie es vorhergehend beschrieben worden ist, am nicht verankerten Ende des gespannten Zugglieds, sodass das Klemmelement jeweils mindestens eine Kontaktfläche mit dem Zugglied aufweist;
v') Aufschieben oder Aufziehen einer starren Hülse über das mindestens eine Klemmelement und das Zugglied, sodass ein Klemmdruck auf das Zugglied ausgeübt wird;
vi') Verankerung des nicht verankerten Endes des Zugglieds.

Insbesondere eignen sich für die beiden vorhergehend beschriebenen Verfahren Ausführungsformen der erfindungsgemässen Vorrichtung mit zwei Klemmelementen.

Weiterhin ist es in den beschriebenen Verfahren üblich, nur an einem Ende des Zugglieds eine Zugvorrichtung anzulegen. Am anderen Ende des Zugglieds wird das Zugglied, typischerweise ebenfalls unter Verwendung einer erfindungsgemässen Vorrichtung als Abschlusselement, verankert.

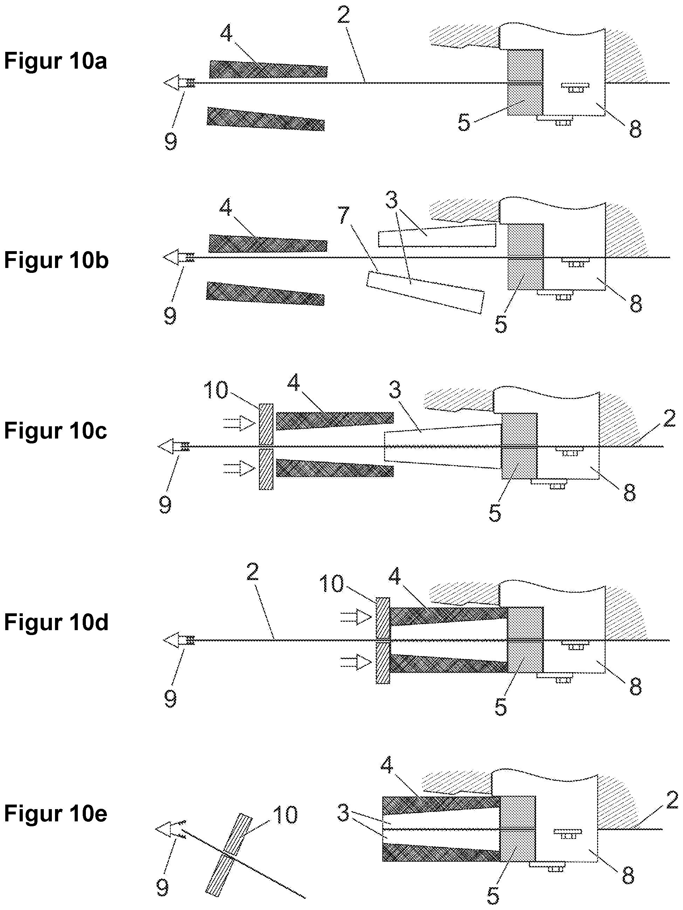

In den Figuren 10a bis 10e ist ein Verfahren zur Krafteinleitung in Zugglieder aus faserverstärkten Kunststoff-Flachbandlamellen und insbesondere zur Anwendung auf die Vorrichtungen, wie sie in den Figuren 9a und 9c beschieben sind, schematisch dargestellt. Es ist hierbei eine Ausführungsform der erfindungsgemässen Vorrichtung mit zwei Klemmelementen dargestellt. Verfahren unter Verwendung von Vorrichtungen mit einem oder mehr als zwei Klemmelementen verlaufen in analoger Weise.

Figur 10a zeigt ein einseitig verankertes Zugglied 2, welches mittels Zugvorrichtung 9, welche mit einer Pfeilspitze ebenfalls die Spannrichtung des Zugglieds darstellt, gespannt wurde und im gespannten Zustand gehalten wird. Die Spannrichtung des Zugglieds verläuft in entgegen gesetzte Richtung zur Zugrichtung des Zugglieds. Weiterhin zeigt Figur 10a eine Haltevorrichtung 8, welche das Zugglied in der gewünschten Position hält und als Befestigungsmittel für die Schlitzplatte 5 dient, sowie die Hülse 4, durch welche das Zugglied 2 geführt wurde.

Zusätzlich zu Figur 10a zeigt Figur 10b zwei Klemmelemente 3, welche mit je einem Reibungselement 7 versehen sind, und im Begriff sind, um das Zugglied 2 herum angeordnet zu werden.

Figur 10c zeigt weiterhin die in ihre Endposition gebrachten Klemmelemente 3 und die Hülse 4, welche über die Klemmelemente geschoben wird. Die Hülse kann dabei mit einer beliebigen geeigneten Vorrichtung über die Klemmelemente geschoben werden. Beispielsweise erfolgt dies mittels einer zweiten Schlitzplatte 10.

Figur 10d zeigt die erfindungsgemässe Vorrichtung 1, wie sie fertig am Zugglied angeordnet ist. In diesem Zustand kann die zweite Schlitzplatte 10 sowie die Zugvorrichtung 9 entfernt werden. Der Überschuss des Zugglieds zwischen der erfindungsgemässen Vorrichtung und der Zugvorrichtung kann entfernt werden. Dies ist in Figur 10e gezeigt.

Weiterhin betrifft die vorliegende Erfindung ein Verfahren zum Verbinden von zwei oder mehr Zuggliedern, wobei die Zugglieder mit einer Vorrichtung, wie sie vorhergehend beschrieben wurde, miteinander verbunden werden. Ein derartiges Verfahren umfasst insbesondere die Schritte
i) Bereitstellen von zwei oder mehr Zuggliedern, welche überlappend zueinander angeordnet sind;
ii) Anlegen mindestens eines Klemmelements aus Kunststoff, wie es vorhergehend beschrieben worden ist, an der Stelle, an welcher sich mehrere Zugglieder überlappen, sodass das Klemmelement mindestens eine Kontaktfläche mit einem der aussen liegenden Zugglieder aufweist;
iii) Aufschieben oder Aufziehen einer starren Hülse über das mindestens eine Klemmelement und die Zugglieder, sodass ein Klemmdruck auf die Zugglieder ausgeübt wird.

Die Zugglieder sind beim beschriebenen Verfahren zum Verbinden von zwei oder mehr Zuggliedern insbesondere gespannt oder vorgespannt. Weiterhin wird zwischen die Zugglieder vorzugsweise jeweils ein Reibungselement, wie es vorhergehend beschrieben worden ist, eingesetzt.

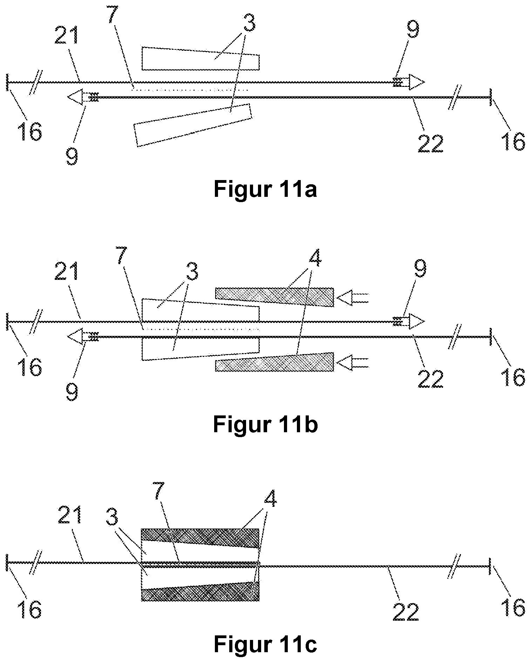

Beispielsweise ist ein solches Verfahren in den Figuren 11a, 11b und 11c beschrieben.

Figur 11a zeigt zwei Zugglieder 21 und 22, welche jeweils mittels Verankerung 16 gegenüberliegend befestigt sind. Die Befestigung erfolgt typischerweise an einem Tragwerk. Die Zugglieder werden je mittels Zugvorrichtung 9, welche mit einer Pfeilspitze ebenfalls die Spannrichtung des entsprechenden Zugglieds darstellt, gespannt und im gespannten Zustand gehalten. Im Überlappungsbereich der Zugglieder, befindet sich ein Reibungselement 7. Zusätzlich zeigt Figur 11a zwei Klemmelemente 3, welche im Begriff sind um den Überlappungsbereich der Zugglieder 21 und 22 herum angeordnet zu werden. Vorzugsweise sind die Klemmelemente ebenfalls mit einem Reibungselement versehen.

Figur 11b zeigt weiterhin die in ihre Endposition gebrachten Klemmelemente 3 und die Hülse 4, welche über die Klemmelemente geschoben wird.

Figur 11c zeigt die beiden Zugglieder 21 und 22, welche mittels erfindungsgemässer Vorrichtung miteinander verbunden sind. Die Zugvorrichtungen 9 wurden entfernt.

Erfindungsgemässe Vorrichtungen in Verbindung mit Zuggliedern aus faserverstärkten Kunststoff-Flachbandlamellen eignen sich insbesondere für die Verstärkung von Tragwerken, bevorzugt für Tragwerke aus Beton. Typischerweise werden derartige Systeme bei der Sanierung bestehender Tragwerke, wie beispielsweise Brücken oder Decken eingesetzt. Weiterhin können beschriebene Systeme auch zur Verstärkung von Mauerwerken, Holztragwerken, Stahlbauten, Erdbebenverstärkungen und dergleichen verwendet werden.

Die Befestigung der erfindungsgemässen Zugglieder, welche vorhergehend beschrieben worden sind, am Tragwerk kann über Verankerungen erfolgen, wie sie dem Fachmann bereits bekannt sind.

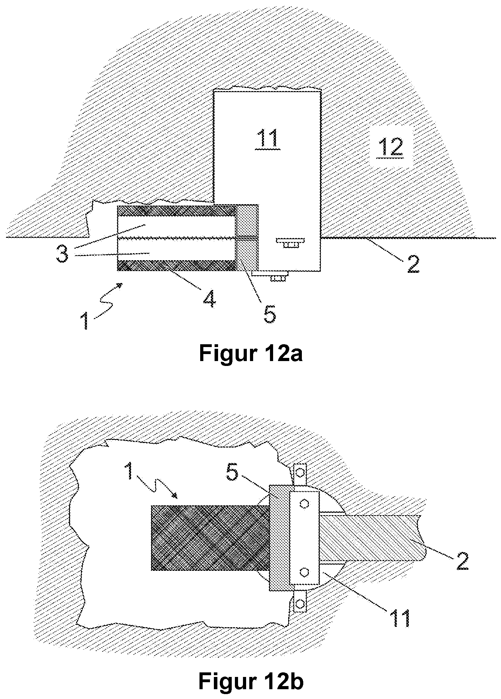

Die Figuren 12a und 12b zeigen beispielsweise die Verankerung eines Zugglieds 2, welches mit einer erfindungsgemässen Vorrichtung 1 zur Krafteinleitung versehen ist, an einem zu verstärkenden Tragwerk 12. Es ist dabei eine Ausführungsform der Vorrichtung mit zwei Klemmelementen dargestellt.

Am Tragwerk 12 wird dabei eine Verankerung 11 angebracht, welche das Zugglied 2 in der gewünschten Position hält und als Befestigungsmittel für die Schlitzplatte 5 dient. Die Vorrichtung 1 zur Krafteinleitung, welche das Abschlusselement des Zugglieds 2 darstellt, ist, in Zugrichtung des Zugglieds betrachtet, hinter der Verankerung 11 bzw. hinter der Schlitzplatte 5 angeordnet. Die Krafteinleitung in das Zugglied erfolgt hierbei über die Klemmelemente 3, durch Abstützung dieser auf die Schlitzplatte 5.

Weiterhin weist die Befestigung des Zugglieds typischerweise ein Zugelement 13 auf, welches die Spannung des Zugglieds ermöglicht.

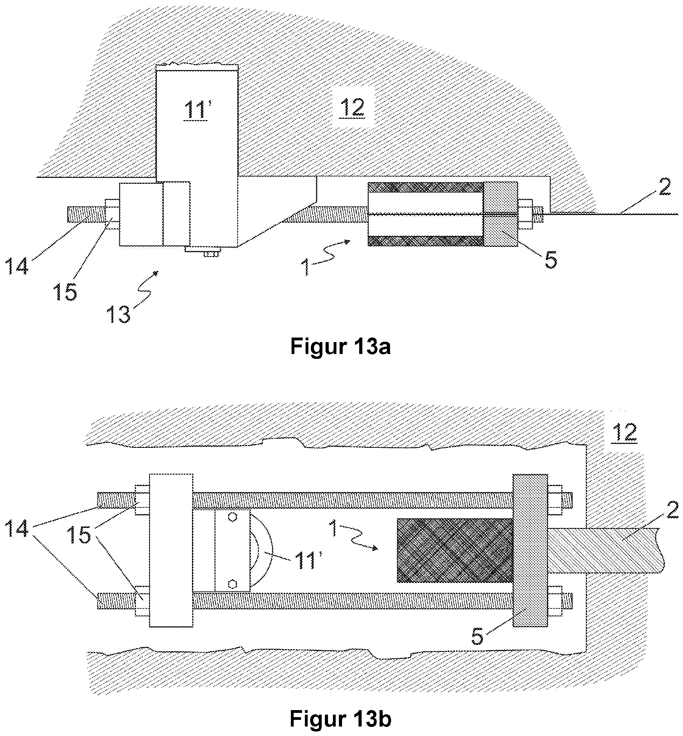

Die Figuren 13a und 13b zeigen beispielsweise ein geeignetes Zugelement zum Spannen eines Zugglieds, welches mit einer erfindungsgemässen Vorrichtung 1 zur Krafteinleitung versehen ist, an einem zu verstärkenden Tragwerk 12.

Im Gegensatz zu dem in den Figuren 12a und 12b beschriebenen Verankerung, befindet sich beim Zugelement die Schlitzplatte 5 nicht direkt am Anker 11' des Zugelements, sondern ist typischerweise über zwei Gewindestangen 14 mit dem Anker verbunden. Die Spannung des Zugglieds erfolgt durch Anziehen der Schraubenmuttern 15. Die Krafteinleitung in das Zugglied erfolgt auch hierbei über die Klemmelemente 3, durch Abstützung dieser auf die Schlitzplatte 5.

Demnach betrifft die vorliegende Erfindung auch ein Verfahren zur Verstärkung von Tragwerken 12 umfassend die Schritte
i) Bereitstellen eines Zugglieds 2, welches je eine erfindungsgemässe Vorrichtung 1, gemäss vorhergehender Beschreibung, als Abschlusselement aufweist;
ii) Befestigen einer zweiteiligen Zugvorrichtung, bestehend aus Verankerung 11 und Zugelement 13, in den Randbereichen der zu verstärkenden Stelle des Tragwerks 12;
iii) Anordnen des Zugglieds 2 an der Oberfläche des Tragwerks 12 und Einführung der Abschlusselemente in jeweils einen Bestandteil der Zugvorrichtung;
iv) Spannen des Zugglieds 2;
v) Verkleben des gespannten Zugglieds mit dem Tragwerk 12.

Erfolgt die Tragwerksverstärkung durch ein Verfahren, wie es in den Figuren 10a bis 10e dargestellt ist, können zur Verankerung des Zugglieds beidseitig Verankerungen verwendet werden, wie sie vorhergehend beschrieben und in den Figuren 12a und 12b dargestellt worden sind. Der Einsatz eines Zugelements ist in diesem Fall nicht nötig, was insbesondere aus Kostengründen ein Vorteil dieser Ausführungsform darstellt. Die zum Spannen des Zugglieds eingesetzte Zugvorrichtung kann nach dem Spannen und Fixieren wieder entfernt werden.

Demnach betrifft die Vorliegende Erfindung auch ein Verfahren zur Verstärkung von Tragwerken 12 umfassend die Schritte
i') Bereitstellen eines Zugglieds 2 aus faserverstärkten Kunststoff-Flachbandlamellen, welches an einem Ende eine erfindungsgemässe Vorrichtung gemäss vorhergehender Beschreibung aufweist;
ii') Befestigen je einer Verankerung 11 in den Randbereichen der zu verstärkenden Stelle des Tragwerks 12 und Anlegen des Zugglieds 2 mit dem Abschlusselement an eine der Verankerungen 11;
iii') Anlegen einer Zugvorrichtung am Ende des Zugglieds 2, welches kein Abschlusselement aufweist;
iv') Spannen des Zugglieds mittels Zugvorrichtung und Anordnen des Zugglieds 2 an die noch nicht belegte Verankerung;
v') Anlegen mindestens eines Klemmelements 3 aus Kunststoff, wie es vorhergehend beschrieben worden ist, am nicht verankerten Ende des gespannten Zugglieds, wobei das Klemmelement, gegenüber der Zugrichtung des Zugglieds, unmittelbar hinter die Verankerung angeordnet wird;
vi') Aufschieben einer starren Hülse 4, in Zugrichtung des Zugglieds, über das mindestens eine Klemmelement 3, sodass ein Klemmdruck auf das Zugglied 2 ausgeübt wird; und
vii') Verkleben des gespannten Zugglieds mit dem Tragwerk 12.

Die Verklebung des Zugglieds mit dem Tragwerk erfolgt in einem dem Fachmann bekannten Verfahren. Insbesondere werden hierfür zweikomponentige Klebstoffe auf Epoxidharzbasis verwendet, wie sie beispielsweise unter den Handelsnamen Sikadur® kommerziell erhältlich sind von Sika Schweiz AG.

### Bezugszeichenliste

- 1: Vorrichtung zur Krafteinleitung
- 2: Zugglied
- 21, 22: Zugglied
- 3: Klemmelement
- 4: Hülse
- 41: Auflage
- 5: Schlitzplatte
- 6: Zugrichtung des Zugglieds
- 7: Reibungselement
- 8: Haltevorrichtung
- 9: Zugvorrichtung
- 10: zweite Schlitzplatte
- 11: Verankerung
- 11': Anker
- 12: Tragwerk
- 13: Zugelement
- 14: Gewindestange
- 15: Schraubenmutter
- 16: Verankerung
- 17: Fase (Hülse)
- 18: Fase (Klemmelement)
- 19: Eintreibsrichtung

## Patentansprüche

1. Vorrichtung (1) zur Krafteinleitung in Zugglieder (2) aus faserverstärkten Kunststoff-Flachbandlamellen umfassend
mindestens ein Klemmelement (3), welches im eingebauten Zustand an einem Zugglied angeordnet ist und mindestens eine Kontaktfläche mit dem Zugglied aufweist; sowie mindestens eine starre Hülse (4), welche um das Klemmelement und das Zugglied herum angeordnet ist und dadurch über das Klemmelement einen Klemmdruck auf das Zugglied ausübt; wobei die Gesamtheit der Klemmelemente (3) eine zylindrische Aussenform aufweist, oder
dass die Gesamtheit der Klemmelemente eine keilförmige oder konische Struktur aufweist, wobei die Querschnittsreduktion gegen die Zugrichtung des Zugglieds verläuft, und **dadurch gekennzeichnet, dass** die Hülse (4) eine zur Aufnahme der Klemmelemente (3) und zur Ausübung des Klemmdrucks geeignete innere Form aufweist und dass das Klemmelement (3) aus Kunststoff besteht, welcher einen Elastizitätsmodul im Bereich von 1000 bis 5000 MPa, eine Biegezugfestigkeit von ≥ 25 MPa und eine Druckfestigkeit von ≥ 25 MPa aufweist.

2. Vorrichtung nach Anspruch 1, **dadurch gekennzeichnet, dass** die Krafteinleitung in das Zugglied über das Klemmelement der Vorrichtung erfolgt.

3. Vorrichtung nach einem der vorhergehenden Ansprüche, **dadurch gekennzeichnet, dass** das Klemmelement aus einem Kunststoff umfassend mindestens ein Polyurethanpolymer besteht.

4. Vorrichtung gemäss einem der vorhergehenden Ansprüche, **dadurch gekennzeichnet, dass** die Kontaktfläche zwischen Klemmelement und Zugglied zusätzlich ein Reibungselement (7) umfasst.

5. Vorrichtung gemäss Anspruch 4, **dadurch gekennzeichnet, dass** das Reibungselement ausgewählt ist aus
- einer Beschichtung des Zugglieds mit Hartkörnern;
- einer Beschichtung des Klemmelements mit Hartkörnern; und
- einem mit Hartkörnern besetzten Gewebe.

6. Vorrichtung gemäss einem der vorhergehenden Ansprüche, **dadurch gekennzeichnet,**
**dass** die Vorrichtung zwei Klemmelemente (3) umfasst, welche um das Zugglied angeordnet sind und jeweils mindestens eine Kontaktfläche mit dem Zugglied aufweisen; sowie
**dass** die Vorrichtung eine starre Hülse (4) umfasst, welche um die beiden Klemmelemente herum angeordnet ist und dadurch über die Klemmelemente einen Klemmdruck auf das Zugglied ausübt.

7. Zugglied aus faserverstärkten Kunststoff-Flachbandlamellen, umfassend mindestens eine Vorrichtung gemäss einem der Ansprüche 1 bis 6.

8. Zuggliederanordnung bestehend aus zwei oder mehr Zuggliedern, welche mittels Vorrichtung gemäss einem der Ansprüche 1 bis 6 miteinander verbunden sind.

9. Verwendung einer Vorrichtung gemäss einem der Ansprüche 1 bis 6 zur Krafteinleitung in Zugglieder aus faserverstärkten Kunststoff-Flachbandlamellen.

10. Verwendung einer Vorrichtung gemäss einem der Ansprüche 1 bis 6 um Zugglieder aus faserverstärkten Kunststoff-Flachbandlamellen miteinander zu verbinden.

11. Verfahren zur Krafteinleitung in Zugglieder aus faserverstärkten Kunststoff-Flachbandlamellen umfassend die Schritte
i) Anlegen des Zugglieds (2) an mindestens ein Klemmelement (3) aus Kunststoff, welcher einen Elastizitätsmodul im Bereich von 1000 bis 5000 MPa, eine Biegezugfestigkeit von ≥ 25 MPa und eine Druckfestigkeit von ≥ 25 MPa aufweist, sodass das Klemmelement mindestens eine Kontaktfläche mit dem Zugglied aufweist;
ii) Aufschieben oder Aufziehen einer starren Hülse (4) über das mindestens eine Klemmelement und das Zugglied, sodass ein Klemmdruck auf das Zugglied ausgeübt wird;
iii) Anlegen einer Zugvorrichtung an das am Zugglied angeordnete mindestens eine Klemmelement mit Hülse;
iv) Einleiten der Kraft in das Zugglied durch die Zugvorrichtung.

12. Verfahren zur Krafteinleitung in Zugglieder aus faserverstärkten Kunststoff-Flachbandlamellen umfassend die Schritte i')
Bereitstellen eines Zugglieds (2), welches mit einem Ende an einem Tragwerk verankert ist;
ii') Anlegen einer Zugvorrichtung am nicht verankerten Ende des Zugglieds;
iii') Spannen des Zugglieds durch die Zugvorrichtung;
iv') Anlegen mindestens eines Klemmelements (3) aus Kunststoff, welcher einen Elastizitätsmodul im Bereich von 1000 bis 5000 MPa, eine Biegezugfestigkeit von ≥ 25 MPa und eine Druckfestigkeit von ≥ 25 MPa aufweist, am nicht verankerten Ende des gespannten Zugglieds (2), sodass das Klemmelement mindestens eine Kontaktfläche mit dem Zugglied aufweist;
v') Aufschieben oder Aufziehen einer starren Hülse (4) über das mindestens eine Klemmelement und das Zugglied, sodass ein Klemmdruck auf das Zugglied ausgeübt wird;
vi') Verankerung des nicht verankerten Endes des Zugglieds.

13. Verfahren gemäss einem der Ansprüche 11 oder 12, **dadurch gekennzeichnet, dass** das Zugglied zwischen zwei Klemmelemente eingelegt wird, sodass die Klemmelemente jeweils eine Kontaktfläche mit dem Zugglied aufweisen; und dass das Aufschieben oder Aufziehen einer starren Hülse über die zwei Klemmelemente erfolgt, sodass ein Klemmdruck auf das Zugglied ausgeübt wird.

14. Verfahren zur Verstärkung von Tragwerken (12) umfassend die Schritte
i) Bereitstellen eines Zugglieds (2) aus faserverstärkten Kunststoff-Flachbandlamellen, welches je eine Vorrichtung (1) zur Krafteinleitung in Zugglieder (2) aus faserverstärkten Kunststoff-Flachbandlamellen umfassend
mindestens ein Klemmelement (3), welches am Zugglied angeordnet ist und mindestens eine Kontaktfläche mit dem Zugglied aufweist; sowie
mindestens eine starre Hülse (4), welche um das Klemmelement und das Zugglied herum angeordnet ist und dadurch über das Klemmelement einen Klemmdruck auf das Zugglied ausübt; und das Klemmelement aus Kunststoff besteht, welcher einen Elastizitätsmodul im Bereich von 1000 bis 5000 MPa, eine Biegezugfestigkeit von ≥ 25 MPa und eine Druckfestigkeit von
≥ 25 MPa aufweist, als Abschlusselemente aufweist;
ii) Befestigen einer zweiteiligen Zugvorrichtung, bestehend aus Verankerung (11) und Zugelement (13), in den Randbereichen der zu verstärkenden Stelle des Tragwerks (12);
iii) Anordnen des Zugglieds (2) an die Oberfläche des Tragwerks (12) und Einführung der Abschlusselemente in jeweils einen Bestandteil der Zugvorrichtung;
iv) Spannen des Zugglieds (2);
v) Verkleben des gespannten Zugglieds mit dem Tragwerk (12).

15. Verfahren zur Verstärkung von Tragwerken (12) umfassend die Schritte
i') Bereitstellen eines Zugglieds (2) aus faserverstärkten Kunststoff-Flachbandlamellen, welches an einem Ende eine Vorrichtung (1) zur Krafteinleitung in Zugglieder (2) aus faserverstärkten Kunststoff-Flachbandlamellen umfassend
mindestens ein Klemmelement (3), welches am Zugglied angeordnet ist und mindestens eine Kontaktfläche mit dem Zugglied aufweist; sowie
mindestens eine starre Hülse (4), welche um das Klemmelement und das Zugglied herum angeordnet ist und dadurch über das Klemmelement einen Klemmdruck auf das Zugglied ausübt; und das Klemmelement aus Kunststoff besteht, welcher einen Elastizitätsmodul im Bereich von 1000 bis 5000 MPa, eine Biegezugfestigkeit von ≥ 25 MPa und eine Druckfestigkeit von
≥ 25 MPa aufweist, aufweist;
ii') Befestigen je einer Verankerung (11) in den Randbereichen der zu verstärkenden Stelle des Tragwerks (12) und Anlegen des Zugglieds (2) mit dem Abschlusselement an eine der Verankerungen (11);
iii') Anlegen einer Zugvorrichtung am Ende des Zugglieds (2), welches kein Abschlusselement aufweist;
iv') Spannen des Zugglieds mittels Zugvorrichtung und Anordnen des Zugglieds (2) an die noch nicht belegte Verankerung;
v') Anlegen mindestens eines Klemmelements (3), welches aus Kunststoff mit einem Elastizitätsmodul im Bereich von 1000 bis 5000 MPa, einer Biegezugfestigkeit von ≥ 25 MPa und einer Druckfestigkeit von ≥ 25 MPa besteht, am nicht verankerten Ende des gespannten Zugglieds, wobei das Klemmelement, gegenüber der Zugrichtung des Zugglieds, unmittelbar hinter die Verankerung angeordnet wird;
vi') Aufschieben einer starren Hülse (4), in Zugrichtung des Zugglieds, über das mindestens eine Klemmelement (3), sodass ein Klemmdruck auf das Zugglied (2) ausgeübt wird; und
vii') Verkleben des gespannten Zugglieds mit dem Tragwerk (12).

## Claims

1. Device (1) for introducing a force into tension members (2) made of fiber-reinforced flat-strip plastic lamellas, comprising
at least one clamping element (3) which is arranged on a tension member in the installed state and which has at least one surface in contact with the tension member; as well as at least one rigid sleeve (4) which is arranged around the clamping element and the tension member and thus exerts a clamping pressure on the tension member via the clamping element; wherein
the clamping elements (3) as a whole have a cylindrical outer shape,
or in that the clamping elements as a whole have a wedge-shaped or conical structure, wherein the cross-section reduction runs against the tension direction of the tension member, and
**characterized in that**
the sleeve (4) has an interior shape suitable for receiving the clamping elements (3) and for exerting the clamping pressure and **in that** the clamping element (3) is made of plastic that has a modulus of elasticity ranging from 1000 to 5000 MPa, a bending tensile strength of ≥ 25 MPa and a compressive strength of ≥ 25 MPa.

2. Device according to Claim 1, **characterized in that** the force is introduced into the tension member via the clamping element of the device.

3. Device according to either of the preceding claims, **characterized in that** the clamping element consists of a plastic comprising at least one polyurethane polymer.

4. Device according to one of the preceding claims, **characterized in that** the contact surface between clamping element and tension member comprises, in addition, a friction element (7).

5. Device according to Claim 4, **characterized in that** the friction element is selected from
- a coating of the tension member with hard grains;
- a coating of the clamping element with hard grains; and
- a fabric occupied with hard grains.

6. Device according to one of the preceding claims, **characterized**
**in that** the device has two clamping elements (3) which are arranged around the tension member and each of which has at least one surface in contact with the tension member; and
**in that** the device comprises a rigid sleeve (4) which is arranged around the two clamping elements and thus exerts a clamping pressure on the tension member via the clamping elements.

7. Tension member made of fiber-reinforced flat-strip plastic lamellas, comprising at least one device according to one of Claims 1 to 6.

8. Tension member arrangement consisting of two or more tension members which are connected to one another by means of the device according to one of Claims 1 to 6.

9. Use of a device according to one of Claims 1 to 6 for introducing a force into tension members made of fiber-reinforced flat-strip plastic lamellas.

10. Use of a device according to one of Claims 1 to 6 for connecting tension members made of fiber-reinforced flat-strip plastic lamellas to one another.

11. Method for introducing a force into tension members made of fiber-reinforced flat-strip plastic lamellas, comprising the steps
i) applying the tension member (2) to at least one clamping element (3) made of plastic that has a modulus of elasticity ranging from 1000 to 5000 MPa, a bending tensile strength of ≥ 25 MPa and a compressive strength of ≥ 25 MPa, so that the clamping element has at least one surface in contact with the tension member;
ii) sliding or pulling a rigid sleeve (4) over the at least one clamping element and the tension member, so that a clamping pressure is exerted on the tension member;
iii) applying a tensioning device to the at least one clamping element with sleeve, which is arranged on the tension member;
iv) introducing the force into the tension member by means of the tensioning device.

12. Method for introducing a force into tension members made of fiber-reinforced flat-strip plastic lamellas, comprising the steps
i') providing a tension member (2) which is anchored with one end on a bearing structure;
ii') applying a tensioning device to the non-anchored end of the tension member;
iii') tensioning the tension member by means of the tensioning device;
iv') applying at least one clamping element (3) made of plastic that has a modulus of elasticity ranging from 1000 to 5000 MPa, a bending tensile strength of ≥ 25 MPa and a compressive strength of ≥ 25 MPa to the non-anchored end of the tensioned tension member (2), so that the clamping element has at least one surface in contact with the tension member;
v') sliding or pulling a rigid sleeve (4) over the at least one clamping element and the tension member, so that a clamping pressure is exerted on the tension member;
vi') anchoring the non-anchored end of the tension member.

13. Method according to one of Claims 11 and 12, **characterized in that** the tension member is inserted between two clamping elements so that the clamping elements each have a surface in contact with the tension member; and **in that** the sliding or pulling of a rigid sleeve takes place over the two clamping elements so that a clamping pressure is exerted on the tension member.

14. Method for reinforcing bearing structures (12), comprising the steps
i) providing a tension member (2) made of fiber-reinforced flat-strip plastic lamellas, each member having a device (1) for introducing a force into tension members (2) made of fiber-reinforced flat-strip plastic lamellas, comprising at least one clamping element (3) which is arranged on the tension member and which has at least one surface in contact with the tension member;
as well as
at least one rigid sleeve (4) which is arranged around the clamping element and the tension member and thus exerts a clamping pressure on the tension member via the clamping element; and the clamping element is made of plastic that has a modulus of elasticity ranging from 1000 to 5000 MPa, a bending tensile strength of ≥ 25 MPa and a compressive strength of ≥ 25 MPa, as closing elements;
ii) attaching a two-part tensioning device consisting of anchoring (11) and tensioning element (13) in the marginal areas of the site of the bearing structure (12) which is to be reinforced;
iii) arranging the tension member (2) on the surface of the bearing structure (12) and introducing the closing elements into a respective component of the tensioning device;
iv) tensioning the tension member (2);
v) making the tensioned tension member adhere to the bearing structure (12).

15. Method for reinforcing bearing structures (12), comprising the steps
i') providing a tension member (2) made of fiber-reinforced flat-strip plastic lamellas, which has at one end a device (1) for introducing a force into tension members (2) made of fiber-reinforced flat-strip plastic lamellas, comprising at least one clamping element (3) which is arranged on the tension member and which has at least one surface in contact with the tension member;
as well as
at least one rigid sleeve (4) which is arranged around the clamping element and the tension member and thus exerts a clamping pressure on the tension member via the clamping element; and
the clamping element is made of plastic that has a modulus of elasticity ranging from 1000 to 5000 MPa, a bending tensile strength of ≥ 25 MPa and a compressive strength of ≥ 25 MPa;
ii') attaching in each case one anchoring (11) in the marginal areas of the site of the bearing structure (12) which is to be reinforced, and applying the tension member (2) with the closing element to one of the anchorings (11);
iii') applying a tensioning device to the end of the tension member (2) which has no closing element;
iv') tensioning the tension member by means of tensioning device and arranging the tension member (2) on the anchoring not yet occupied;
v') applying at least one clamping element (3) which is made of plastic having a modulus of elasticity ranging from 1000 to 5000 MPa, a bending tensile strength of ≥ 25 MPa and a compressive strength of ≥ 25 MPa to the non-anchored end of the tensioned tension member, wherein the clamping element is arranged directly behind the anchoring, with respect to the tension direction of the tension member;
vi') sliding a rigid sleeve (4), in the tension direction of the tension member, over the at least one clamping element (3), so that a clamping pressure is exerted on the tension member (2); and vii') making the tensioned tension member adhere to the bearing structure (12).

## Revendications

1. Dispositif (1) pour l'introduction de force dans des éléments de traction (2) en lamelles de bandes plates en matière synthétique renforcées par des fibres, comprenant :
au moins un élément de serrage (3), qui est disposé, à l'état monté, sur un élément de traction et qui présente au moins une face de contact avec l'élément de traction ; ainsi qu'au moins une douille rigide (4), qui est disposée autour de l'élément de serrage et de l'élément de traction et qui exerce ainsi via l'élément de serrage une pression de serrage sur l'élément de traction,
dans lequel la totalité des éléments de serrage (3) présente une forme extérieure cylindrique, ou
que la totalité des éléments de serrage présente une structure en forme de coin ou conique, dans lequel la réduction de section transversale est orientée à l'opposé de la direction de traction de l'élément de traction, et
**caractérisé en ce que**
la douille (4) présente une forme intérieure apte à recevoir les éléments de serrage (3) et à exercer la pression de serrage et **en ce que** l'élément de serrage (3) se compose de matière synthétique qui présente un module d'élasticité compris dans la plage de 1000 à 5000 MPa, une résistance à la flexion de ≥ 25 MPa et une résistance à la pression de ≥ 25 MPa.

2. Dispositif selon la revendication 1, **caractérisé en ce que** l'introduction de force dans l'élément de traction s'effectue par le biais de l'élément de serrage du dispositif.

3. Dispositif selon l'une quelconque des revendications précédentes, **caractérisé en ce que** l'élément de serrage se compose d'une matière synthétique comprenant au moins un polymère de polyuréthane.

4. Dispositif selon l'une quelconque des revendications précédentes, **caractérisé en ce que** la face de contact entre l'élément de serrage et l'élément de traction présente en outre un élément de frottement (7) .

5. Dispositif selon la revendication 4, **caractérisé en ce que** l'élément de frottement est choisi parmi
- un revêtement de l'élément de traction avec des grains durs ;
- un revêtement de l'élément de serrage avec des grains durs ; et
- un tissu comprenant des grains durs.

6. Dispositif selon l'une quelconque des revendications précédentes, **caractérisé en ce que** le dispositif comprend deux éléments de serrage (3), qui sont agencés autour de l'élément de traction et qui présentent respectivement au moins une face de contact avec l'élément de traction, et **en ce que** le dispositif comprend une douille rigide (4), qui est agencée autour des deux éléments de serrage et qui exerce ainsi via les éléments de serrage une pression de serrage sur l'élément de traction.

7. Elément de traction en lamelles de bandes plates en matière synthétique renforcées par des fibres, comprenant au moins un dispositif selon l'une quelconque des revendications 1 à 6.

8. Agencement d'éléments de traction se composant de deux éléments de traction ou plus qui sont reliés l'un à l'autre au moyen du dispositif selon l'une quelconque des revendications 1 à 6.

9. Utilisation d'un dispositif selon l'une quelconque des revendications 1 à 6 pour l'introduction de force dans des éléments de traction en lamelles de bandes plates en matière synthétique renforcées par des fibres.

10. Utilisation d'un dispositif selon l'une quelconque des revendications 1 à 6 pour relier l'un à l'autre des éléments de traction en lamelles de bandes plates en matière synthétique renforcées par des fibres.

11. Procédé pour l'introduction de force dans des éléments de traction en lamelles de bandes plates en matière synthétique renforcées par des fibres, comprenant les étapes suivantes :
i) poser l'élément de traction (2) sur au moins un élément de serrage (3) se composant de matière synthétique qui présente un module d'élasticité compris dans la plage de 1000 à 5000 MPa, une résistance à la flexion de ≥ 25 MPa et une résistance à la pression de ≥ 25 MPa, de telle manière que l'élément de serrage présente au moins une face de contact avec l'élément de traction ;
ii) glisser ou tirer une douille rigide (4) sur ledit au moins un élément de serrage et l'élément de traction, de telle manière qu'une pression de serrage soit exercée sur l'élément de traction ;
iii) poser un dispositif de traction sur ledit au moins un élément de serrage avec une douille disposé sur l'élément de traction ;
iv) introduire la force dans l'élément de traction au moyen du dispositif de traction.

12. Procédé pour l'introduction de force dans des éléments de traction en lamelles de bandes plates en matière synthétique renforcées par des fibres, comprenant les étapes suivantes :
i') préparer un élément de traction (2), qui est ancré par une extrémité à un ouvrage porteur ;
ii') poser un dispositif de traction à l'extrémité non ancrée de l'élément de traction ;
iii')tendre l'élément de traction au moyen du dispositif de traction ;
iv') poser au moins un élément de serrage (3) se composant de matière synthétique qui présente un module d'élasticité compris dans la plage de 1000 à 5000 MPa, une résistance à la flexion de ≥ 25 MPa et une résistance à la pression de ≥ 25 MPa sur l'extrémité non ancrée de l'élément de traction (2) tendu, de telle manière que l'élément de serrage présente au moins une face de contact avec l'élément de traction ;
v') glisser ou tirer une douille rigide (4) sur ledit au moins un élément de serrage et l'élément de traction, de telle manière qu'une pression de serrage soit exercée sur l'élément de traction ;
vi') ancrer l'extrémité non ancrée de l'élément de traction.

13. Procédé selon l'une quelconque des revendications 11 ou 12, **caractérisé en ce que** l'élément de traction est inséré entre deux éléments de serrage de telle sorte que les éléments de serrage présentent à chaque fois une surface de contact avec l'élément de traction ; et **en ce que** l'action de glisser ou tirer une douille rigide sur les deux éléments de serrage est effectuée de telle sorte qu'une pression de serrage soit exercée sur l'élément de traction.

14. Procédé pour le renforcement d'ouvrages porteurs (12), comprenant les étapes suivantes :
i) préparer un élément de traction (2) en lamelles de bandes plates en matière synthétique renforcées par des fibres, qui présente respectivement un dispositif (1) pour l'introduction de force dans des éléments de traction (2) en lamelles de bandes plates en matière synthétique renforcées par des fibres, comprenant :
au moins un élément de serrage (3), qui est disposé sur l'élément de traction et qui présente au moins une face de contact avec l'élément de traction ;
ainsi qu'
au moins une douille rigide (4), qui est disposée autour de l'élément de serrage et de l'élément de traction et qui exerce ainsi via l'élément de serrage une pression de serrage sur l'élément de traction ; et
l'élément de serrage se compose de matière synthétique qui présente un module d'élasticité compris dans la plage de 1000 à 5000 MPa, une résistance à la flexion de ≥ 25 MPa et une résistance à la pression de ≥ 25 MPa, comme élément terminal ;
ii) fixer un dispositif de traction en deux parties, se composant d'un ancrage (11) et d'un élément de traction (13), dans les régions de bord du point à renforcer de l'ouvrage porteur (12) ;
iii) disposer l'élément de traction (2) à la surface de l'ouvrage porteur (12) et introduire les éléments terminaux respectivement dans un composant du dispositif de traction ;
iv) tendre l'élément de traction (2) ;
v) coller l'élément de traction tendu à l'ouvrage porteur (12).

15. Procédé pour le renforcement d'ouvrages porteurs (12), comprenant les étapes suivantes :
i') préparer un élément de traction (2) en lamelles de bandes plates en matière synthétique renforcées par des fibres, qui comprend à une extrémité un dispositif (1) pour l'introduction de force dans des éléments de traction (2) en lamelles de bandes plates en matière synthétique renforcée par des fibres, comprenant :
au moins un élément de serrage (3), qui est disposé sur l'élément de traction et qui présente au moins une face de contact avec l'élément de traction ;
ainsi qu'
au moins une douille rigide (4), qui est disposée autour de l'élément de serrage et de l'élément de traction et qui exerce ainsi via l'élément de serrage une pression de serrage sur l'élément de traction ; et
l'élément de serrage se compose de matière synthétique qui présente un module d'élasticité compris dans la plage de 1000 à 5000 MPa, une résistance à la flexion de ≥ 25 MPa et une résistance à la pression de ≥ 25 MPa ;
ii') fixer chaque fois un ancrage (11) dans des régions de bord du point à renforcer de l'ouvrage porteur (12) et poser l'élément de traction (2) avec l'élément terminal sur un des ancrages (11);
iii')poser un dispositif de traction à l'extrémité de l'élément de traction (2), qui ne présente pas d'élément terminal ;
iv') tendre l'élément de traction au moyen du dispositif de traction et disposer l'élément de traction (2) sur l'ancrage encore inoccupé ;
v') poser au moins un élément de serrage (3) qui se compose de matière synthétique avec un module d'élasticité compris dans la plage de 1000 à 5000 MPa, une résistance à la flexion de ≥ 25 MPa et une résistance à la pression de ≥ 25 MPa, sur l'extrémité non ancrée de l'élément de traction tendu, dans lequel on dispose l'élément de serrage, par rapport à la direction de traction de l'élément de traction, directement derrière l'ancrage;
vi') glisser une douille rigide (4) dans la direction de traction de l'élément de traction sur ledit au moins un élément de serrage (3), de telle manière qu'une pression de serrage soit exercée sur l'élément de traction (2) ; et
vii')coller l'élément de traction tendu à l'ouvrage porteur (12).
